Europäisches Patentamt

European Patent Office

Office européen des brevets

(11) Numéro de publication : **0 511 138 B1**

(12) **FASCICULE DE BREVET EUROPEEN**

(45) Date de publication du fascicule du brevet :
28.06.95 Bulletin 95/26

(51) Int. Cl.⁶ : **F16L 47/00**

(21) Numéro de dépôt : **92450004.4**

(22) Date de dépôt : **17.04.92**

(54) **Procédé d'assemblage mécanique d'un tube en matériau composite et d'une pièce métallique et assemblage ainsi réalisé.**

(30) Priorité : **22.04.91 FR 9105340**

(43) Date de publication de la demande :
**28.10.92 Bulletin 92/44**

(45) Mention de la délivrance du brevet :
**28.06.95 Bulletin 95/26**

(84) Etats contractants désignés :
**BE DE DK ES GB GR IT NL**

(56) Documents cités :
**EP-A- 0 019 585
EP-A- 0 093 012
EP-A- 0 239 338
EP-A- 0 385 839**

(73) Titulaire : **AEROSPATIALE Société Nationale
Industrielle
37, Boulevard de Montmorency
F-75781 Paris Cédex 16 (FR)**

Titulaire : **INSTITUT FRANCAIS DU PETROLE
1 et 4 Avenue de Bois-Préau
BP 311
F-92506 Rueil Malmaison Cédex (FR)**

(72) Inventeur : **Auberon, Marcel
14 allée du Pasten
F-33160 Le Haillan (FR)**
Inventeur : **Thouraud, Jean-Jacques
10 allée des Hirondelles
F-33127 Martignas (FR)**
Inventeur : **Sparks, Charles
19bis rue Pasteur
F-78110 Le Vesinet (FR)**
Inventeur : **Odru, Pierre
7 rue Pablo Picasso
F-94120 Fontenay Sous Bois (FR)**

(74) Mandataire : **Thébault, Jean-Louis
Cabinet Thébault S.A.
1 Allées de Chartres
F-33000 Bordeaux (FR)**

## Description

La présente invention a trait à un procédé d'assemblage mécanique d'une pièce métallique, en particulier un embout, sur un tube en matériau composite destiné notamment à être utilisé dans la recherche pétrolière en mer.

Dans ce domaine d'utilisation, les tubes et leurs embouts doivent résister à des forces de traction pouvant atteindre, dans les conditions normales d'exploitation, un million de newtons environ.

Les tubes métalliques à embouts métalliques utilisés en recherche pétrolière résistent à de telles charges.

Divers procédés industriels ont été mis au point pour réaliser des tubes en matériau composite munis d'embouts métalliques et capables de supporter des efforts de traction importants, les tubes en matériaux composites présentant vis à vis des tubes métalliques des avantage substantiels du fait de leur résistance à la fatigue et à la corrosion et de leur moindre poids.

Selon un premier procédé tel que décrit dans le brevet français FR-A-2.509.011 aux noms des Demandeurs, on place un insert métallique conique à l'extrémité d'un tube en matériau composite et entre la surface externe de cet embout et la paroi interne du tube est disposée une feuille d'élastomère qui est collée sur cette surface externe, ainsi les charges sont transmises par l'intermédiaire de cette couche élastomère. Après une première polymérisation du tube, un second élément métallique en forme de coquille est disposé sur le composite polymérisé puis fretté par un bobinage circonférentiel par exemple de fibres de verre. La liaison métal-composite est assurée aussi par l'intermédiaire d'une autre couche élastomère et une seconde cuisson est alors nécessaire pour assurer la polymérisation du frettage externe et des films de colle.

Selon un autre procédé décrit dans EP-A-0.093.012 et permettant d'assembler un tube réalisé par enroulement de filaments à un autre corps, des enveloppes métalliques creuses et tubulaires sont intercalées entre des couches de fibres réalisées par enroulement de filaments espacés dans le sens radial, et cela au niveau des extrémités. La liaison est assurée par des dispositifs de fixation qui traversent le composite et les enveloppes métalliques. Dans ce cas, l'effort de traction appliqué à l'embout métallique est transmis à la structure composite par effet de matage.

Selon encore un autre procédé décrit dans le brevet français FR-A-2.641.841 aux noms des Demandeurs, on bobine en continu des fibres essentiellement longitudinales à la fois autour d'un mandrin cylindrique pour constituer la partie courante du tube composite et autour d'un embout métallique ayant la forme d'un double cône et à fretter ensuite ces fibres longitudinales sur l'embout métallique par des fibres circonférentielles avant d'assurer une polymérisation finale du tube, des moyens complémentaires étant prévus pour favoriser l'intégration dudit embout dans le tube et limiter ainsi l'allongement dudit tube.

Si ces procédés permettent d'obtenir des tubes, dits "rigides" par opposition aux tubes métalliques "flexibles" ou "souples", et qui sont capables de supporter les efforts de traction des conditions d'exploitation de recherche pétrolière en mer, en offrant un allongement minimal sous la pression interne, ils présentent tous l'inconvénient que la longueur du tube fini doit être connue avant de procéder à la fabrication de la partie courante du tube, c'est-à-dire la mise en place des enroulements filamentaires.

En effet, dans les trois techniques rappelées ci-dessus, le bobinage des couches filamentaires constituant le tube est pratiqué sur un mandrin portant les pièces de raccordement, ou embouts, du tube ; ces pièces sont alors recouvertes par les fibres et ainsi "fixées" au matériau composite.

Il n'est donc pas possible de réaliser et stocker du tube en matériau composite en attente de la connaissance de la longueur du tube, équipé d'embouts de raccordement, dont on aura besoin.

Le but de l'invention est de proposer une technique de liaison d'un embout métallique, ou d'une manière générale, d'une pièce métallique, sur un tube en matériau composite préalablement bobiné et polymérisé ou durci, à l'aide d'éléments de pénétration encastrés dans les deux éléments à assembler de manière à réaliser une liaison ayant une résistance à la traction maximale au regard de la résistance de la partie courante du tube.

A cet effet, l'invention a pour objet un procédé d'assemblage mécanique d'un tube en matériau composite et d'une pièce métallique tubulaire, caractérisé en ce que l'on réalise tout d'abord un tube de section constante par enroulement filamentaire de fibres préimprégnées soumises ensuite à polymérisation, puis l'on tronçonne perpendiculairement à son axe le tube ainsi obtenu, à la longueur désirée, puis on introduit au moins partiellement à chaque extrémité du tube ainsi tronçonné une pièce métallique tubulaire et l'on solidarise l'extrémité du tube et la partie pénétrante de l'insert métallique à l'aide d'éléments de pénétration disposés suivant au moins deux alignements circonférentiels réguliers identiques et identiquement espacés les uns des autres, définissant chacun un plan perpendiculaire à l'axe du tube et conformément à la loi de répartition suivante :

$$D = \frac{(n-1)i}{K \, tg \, \alpha}$$

dans laquelle

. D est la distance entre deux plans successifs d'alignements circonférentiels d'éléments de pénétration,

. K est un nombre entier égal à 1 ou 2,

. n est le nombre d'alignements,

. i est l'intervalle entre deux éléments de pénétration consécutifs d'un même alignement,

. α est l'angle, par rapport à l'axe du tube, de la
couche des fibres devant assurer la résistance
en traction.

Un tel procédé permet d'équilibrer la résistance
au matage du matériau composite au droit de tous les
éléments de pénétration et la résistance en traction
de la section restante de matériau composite sur le
premier alignement circonférentiel d'éléments de pénétration, lequel supporte intégralement tout l'effort
de traction, les alignements suivants (en direction de
l'extrémité du tube) supportant progressivement un
effort de traction moindre selon leur rang.

Une fois ce choix préalable effectué, en respectant les conditions de répartition énoncées ci-dessus,
les éléments de pénétration se trouvent ainsi distribués le long de lignes hélicoïdales et plus précisément suivant à la fois des alignements hélicoïdaux à
pas à droite et des alignements hélicoïdaux à pas à
gauche, tous d'un même angle égal à l'angle de bobinage, positif ou négatif, correspondant aux enroulements, aller et retour respectivement, des fibres.

Les éléments de pénétration ci-dessus seront,
en outre, alignés suivant des génératrices du tube ou
en quinconce, selon que la valeur retenue pour le
coefficient K est 1 ou 2, l'une ou l'autre de ces valeurs
relevant d'un simple choix et tenant compte de la valeur de l'angle de bobinage, les effets des deux modes de répartition étant similaires.

Il est ainsi évident que chaque alignement hélicoïdal d'éléments de pénétration affectera le ou les mêmes faisceaux de fibres et que l'on réduira ainsi au minimum le nombre des fibres sectionnées pour l'implantation desdits éléments de pénétration.

Le nombre d'éléments de pénétration par alignement circonférentiel est déterminé, comme indiqué
plus haut, pour obtenir ledit équilibre entre résistance
au matage et résistance en traction du matériau
composite sur le premier alignement, cependant que
le nombre total d'éléments de pénétration pour chaque extrémité du tube est déterminé de façon à obtenir la résistance au matage souhaitée, lesdits éléments étant répartis suivant un nombre approprié n
d'alignements circonférentiels côte à côte.

Des calculs et des essais ont montré que 3 était
une valeur optimale pour le nombre n.

Suivant un mode de mise en oeuvre du procédé
de l'invention, la pièce métallique solidarisée de l'extrémité du tube comprend un élément tubulaire dont
une partie est introduite dans le tube et un élément
tubulaire externe coaxial au premier et solidaire de lui
en sorte de prendre en sandwich l'extrémité du tube,
les éléments de pénétration étant constitués de pions
traversant des perçages réalisée radialement dans
les deux éléments métalliques et l'extrémité du tube.

Avantageusement les perçages ménagés dans la
partie tubulaire métallique interne sont borgnes et ne
débouchent pas dans la paroi interne de ladite partie
métallique.

Il est important de noter par ailleurs que le procédé de l'invention ne nécessite aucun usinage, ni de
l'extérieur ni de l'intérieur, du tube en matériau
composite, ce qui garantit l'intégralité de la résistance
du tube. Par usinage on entend toute rectification du
diamètre, intérieur ou extérieur, susceptible d'entamer des fibres et donc de diminuer la résistance.

Par contre, il peut être nécessaire d'effectuer au
préalable un "blanchissage" de l'extrémité du tube,
tant interne qu'externe, pour éliminer les imperfections de surface dues aux "rejets" de résine, mais un
tel "blanchissage" n'est pas susceptible d'atteindre
les fibres, c'est-à-dire d'amoindrir la résistance intrinsèque du tube.

Le procédé de l'invention s'applique au cas d'un
tube présentant des fibres enroulées suivant un
même angle.

Il s'applique également au cas d'un tube présentant deux types de fibres enroulées suivant deux angles différents.

Dans ce cas, les éléments de pénétration sont répartis conformément à la loi de répartition ci-dessus
en ne prenant en compte que l'angle d'enroulement
des fibres les plus sollicitées en traction, c'est-à-dire
les fibres ayant l'angle de bobinage le plus faible par
rapport à l'axe du tube, sans tenir compte des fibres
enroulées selon l'autre angle de bobinage, ou bien on
prendra en compte, dans une certaine mesure, ces
dernières fibres en répartissant les éléments de pénétration d'une manière particulière.

Cette manière particulière consiste à répartir les
éléments de pénétration suivant, d'une part, deux alignements circonférentiels satisfaisant à la loi de répartition énoncée plus haut et dans laquelle l'angle α
est l'angle de bobinage des fibres les plus sollicitées
en traction et, d'autre part, un troisième alignement
interposé entre les deux premiers et délimité par les
intersections entre l'un ou l'autre des alignements
hélicoïdaux, à pas à droite ou à gauche, des éléments
de pénétration des deux alignements susdits et l'une
ou l'autre des hélices, à pas à droite ou à gauche,
d'angle égal à l'angle de bobinage du deuxième type
de fibres, passant par les éléments de pénétration du
premier alignement.

De préférence, on imposera à la distance D entre
deux alignements circonférentiels consécutifs la
condition supplémentaire suivante :

. D ≧ K' d dans laquelle

. K' est un nombre entier ou fractionnaire
compris entre 3 et 4.

. d est le diamètre d'un élément de pénétration.

Cette condition supplémentaire peut être également imposée d'une manière générale à toute répartition des éléments de pénétration selon l'invention.

D'autres avantages du procédé de l'invention
ressortiront de la description qui va suivre de modes de mise en oeuvre dudit procédé, description donnée à titre d'exemple uniquement et en regard des dessins annexés sur lesquels :

- Figure 1 est une demi-vue en coupe axiale verticale de l'extrémité d'un tube en matériau composite solidarisé d'un embout métallique conformément à l'invention ;
- Figure 2 est un schéma du mode de distribution selon des génératrices du tube des pions de l'assemblage de la figure 1;
- Figure 3 est un schéma d'un mode de distribution en quinconce des pions, pour un même angle de bobinage que celui de la figure 2;
- Figure 4 est une représentation agrandie et plus détaillée de la figure 3;
- Figure 5 illustre un mode de répartition selon une variante du procédé de l'invention, dans le cas d'un faible angle de bobinage des fibres;
- Figure 6 illustre un mode de répartition des pions conforme à l'invention et tenant compte d'un second type de fibres présentant un angle de bobinage différent de celui du premier type de fibres;
- Figure 7 représente l'extrémité d'un tube en matériau composite présentant deux types de fibres à angles d'enroulement différents, équipé d'un embout métallique dont les pions sont répartis conformément au schéma de la figure 6, et
- Figure 8 est une coupe axiale d'un tube selon la figure 7 illustrant un mode de répartition des couches des deux types de fibres.

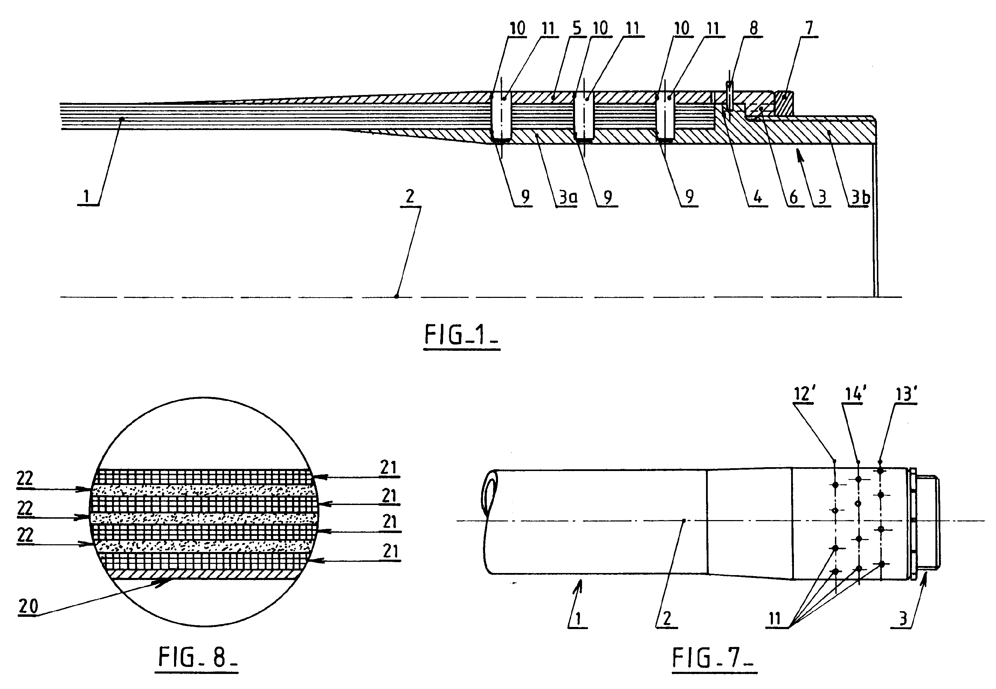

Sur la figure 1 on a représenté en 1 un tube en matériau composite d'épaisseur constante réalisé par bobinage de fibres, par exemple de carbone, sous un même angle d'enroulement, noté $\alpha$ en valeur absolue, par rapport à l'axe 2 dudit tube, avec une proportion égale de fibres enroulées dans un sens + $\alpha$, par exemple enroulement à gauche ou enroulement aller, et dans un sens- $\alpha$, enroulement à droite ou enroulement retour.

On va supposer en un premier temps que le tube 1 n'est réalisé qu'avec de telles fibres de carbone ainsi enroulées, l'épaisseur du tube étant par exemple d'une vingtaine de mm.

Le tube 1 est réalisé à la manière connue, par bobinage sur un mandrin de fibres préimprégnées, suivi d'une polymérisation. Après quoi, le tube est retiré du mandrin est tronçonné à la longueur désirée.

Dans le mode de mise en oeuvre représenté en figure 1, l'extrémité du tube reçoit une pièce tubulaire métallique constituée par un embout de raccordement 3 comprenant une partie en forme de coin 3a, ou insert intérieur, destinée à s'insérer à l'intérieur du tube 1 dont l'extrémité vient en butée contre un épaulement 4 de l'embout 3 et une partie tubulaire métallique 5 indépendante coaxiale à l'embout. Cette partie 5 vient se rapporter et se fixer sur l'extérieur de l'embout de manière à emprisonner en sandwich avec la partie interne 3a l'extrémité du tube. La partie 5, ou insert extérieur, comporte un talon périphérique interne 6 bloqué entre l'épaulement 4 et un écrou 7 vissé sur un filetage de la partie externe 3b de l'embout.

Un pion 8 traversant radialement l'insert extérieur 5 et pénétrant en partie dans l'épaulement 4 permet un repérage radial du tube 1.

Au droit de la zone d'insertion des éléments de pénétration dans les inserts intérieur 3a et extérieur 5, ces derniers ont une épaisseur constante ; au delà, c'est-à-dire en direction de la partie centrale du tube, l'épaisseur desdits inserts va en s'amenuisant régulièrement suivant une pente destinée à minimiser les flexions locales du matériau composite dans la zone de raccordement entre la partie courante du tube et l'embout métallique.

Les inserts intérieur 3a et extérieur 5 sont munis de perçage radiaux 9 et 10 respectivement, recevant des pions 11 traversant radialement la paroi du tube 1 et dont les extrémités occupent lesdits perçages en regard 9 et 10.

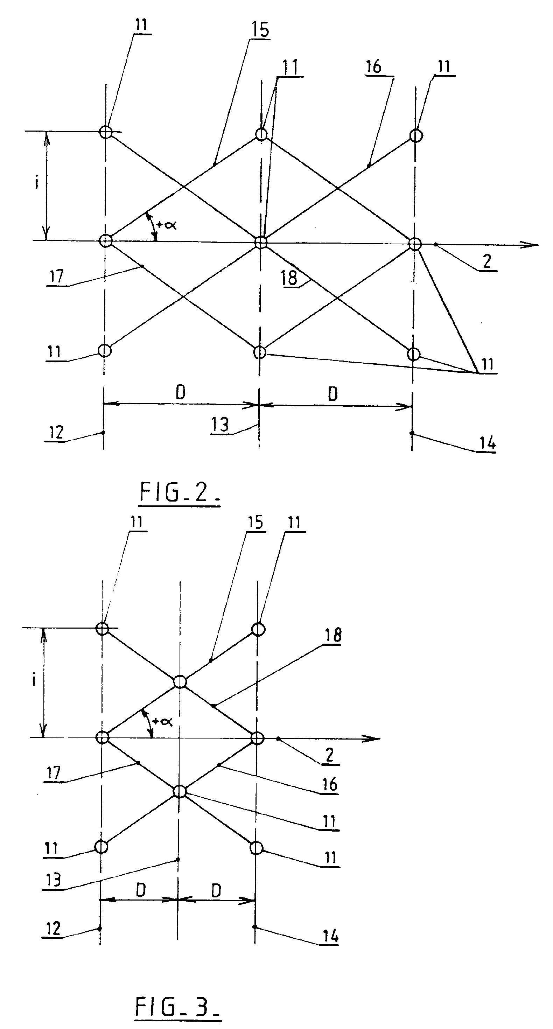

La figure 2 illustre le mode de répartition des pions 11 tout autour du tube 1 et de son embout 3.

Les pions 11 sont répartis en trois alignements circonférentiels, symbolisés respectivement en 12,13 et 14 sur la figure 2, comportant chacun un même nombre déterminé de pions régulièrement distribués angulairement, l'intervalle entre deux pions étant i. Chaque alignement définit un plan perpendiculaire à l'axe du tube symbolisé par l'axe fléché 2, la distance D entre deux plans ou alignements 12,13,14 consécutifs étant identique.

Les pions 11 sont, conformément à l'invention, répartis suivant la condition :

$$D = \frac{(n-1)i}{K \, tg \, \alpha}$$

dans laquelle

. D est ladite distance entre deux plans successifs d'alignements circonférentiels (12, 13, 14),
. K est égal à 1, ce qui correspond à une distribution des pions 11 suivant des génératrices du tube 1,
. n, nombre des alignements, est égal à 3,
. i est l'intervalle entre deux pions consécutifs d'un même alignement circonférentiel (12, 13, 14),
. $\alpha$ est l'angle, par rapport à l'axe 2 du tube 1, d'enroulement des fibres du tube.

La figure 3 illustre un mode de répartition du même nombre total de pions 11, également sur trois alignements circonférentiels 12, 13, 14, que le mode illustré par la figure 2, en respectant la même loi de répartition, mais en donnant au coefficient K une valeur égale à 2 correspondant à une répartition en quinconce desdits pions 11.

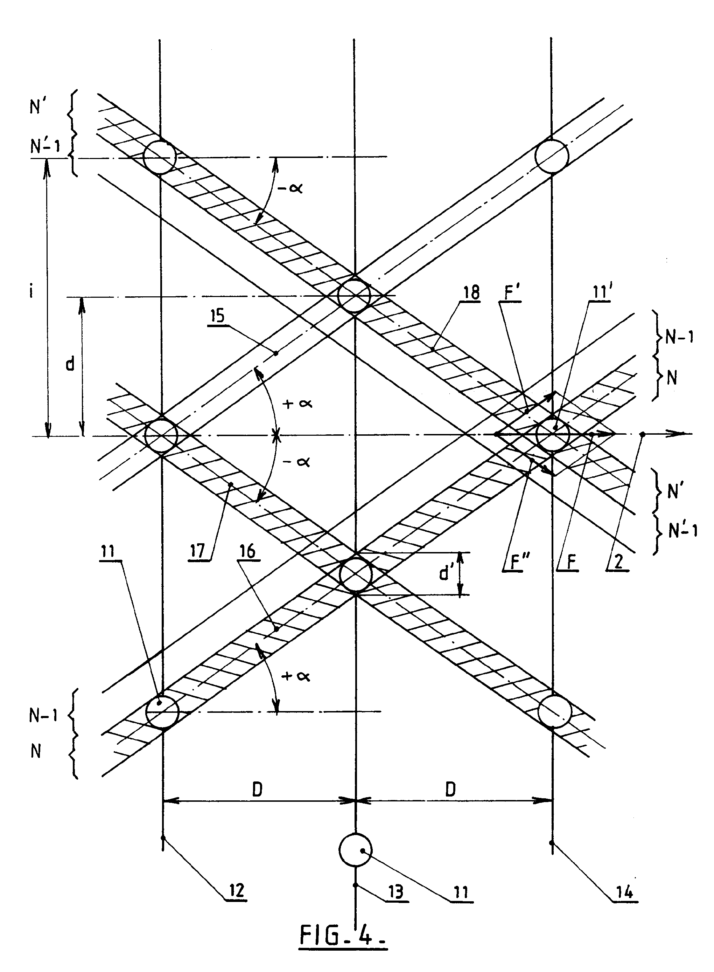

Les effets des deux modes de répartition des figures 2 et 3 sont équivalents comme on va maintenant l'expliquer en se reportant à la figure 4.

La distribution spatiale des pions 11, que l'on soit selon le mode de la figure 2 ou selon le mode de la figure 3, est telle que les pions 11 se trouvent à la fois selon des alignements hélicoïdaux à pas à gauche d'angle + α repérés 15 et 16 par exemple sur les figure 2 à 4 et selon des alignements hélicoïdaux à pas à droite d'angle - α, repérés 17 et 18.

Ces alignements correspondent à des faisceaux de fibres, aller et retour, si bien qu'un même faisceau aller, par exemple N (figure 4), sera traversé de part en part par tous les pions 11 de l'alignement 16, cependant qu'un même faisceau retour, par exemple N', sera traversé de part en part par tous les pions 11 de l'alignement 18.

Par faisceau on entend l'ensemble des fibres superposées sur toute l'épaisseur du tube.

De la sorte, un nombre minimal de fibres de l'enroulement seront sectionnées par les perçages destinés aux pions 11.

C'est ainsi, par exemple, que la conjonction des faisceaux de fibres N-1 et N'-1 précédant les faisceaux N et N', le bobinage se déroulant de la gauche vers la droite en considérant la figure 4, assurera la reprise des efforts longitudinaux F appliqués au pion 11'. Le faisceau N-1 supportera l'effort F' et le faisceau N'-1 l'effort F'', la résultante de F' et F'' équivalant à F en valeur absolue.

La délimitation des faisceaux de fibres N, N', N-1, N'-1 est purement artificielle et destinée simplement à faciliter la compréhension des effets de l'implantation particulière des pions 11, les fibres étant alignées et distribuées de manière homogène dans toute l'épaisseur du tube 1.

A la suite de calculs et d'essais on a constaté que 3 était un nombre optimal d'alignements circonférentiels.

Chaque alignement circonférentiel 12, 13 ou 14 comporte un même nombre de pions 11 et ce nombre est de préférence déterminé de façon à obtenir un équilibre entre la résistance au matage du matériau composite en appui sur tous les pions de l'assemblage et la résistance en traction de la section restante de matériau composite sur l'alignement circonférentiel considéré.

Les calculs sont faits en tenant compte de la résistance du matériau composite qui est inférieure à celle du matériau, par exemple de l'acier inoxydable, de l'embout (3,5).

Un tel équilibre entre résistance au matage et résistance en traction répond à l'équation suivante :

$$Rm.d.N.n = Rt (\pi D - d'N)$$

dans laquelle :

. Rm est la résistance au matage du matériau composite ;
. d est le diamètre des pions ;
. N est le nombre des pions par alignement circonférentiel;

. n est le nombre d'alignements circonférentiels.
. Rt est la résistance en traction du matériau composite ;
. D est le diamètre moyen du tube en matériau composite.

. $d' = \dfrac{d}{\cos \alpha}$ = diminution de la section résistante liée à la présence d'un perçage réalisé dans les fibres.

En considérant les figures 2 et 3, on constate que suivant le mode de répartition des pions 11 selon des génératrices (figure 2), la distance D entre deux alignements circonférentiels (12, 13, 14) consécutifs est double de celle du mode de répartition en quinconce (figure 3).

Il s'ensuit que le choix de la valeur 1 ou 2 du coefficient K pourra dépendre de la configuration de l'embout métallique 3 et de la valeur de l'angle α.

Pour un même nombre d'alignements circonférentiels on pourra rechercher une plus grande concentration des pions (figure 3) occupant une moindre longueur d'embout.

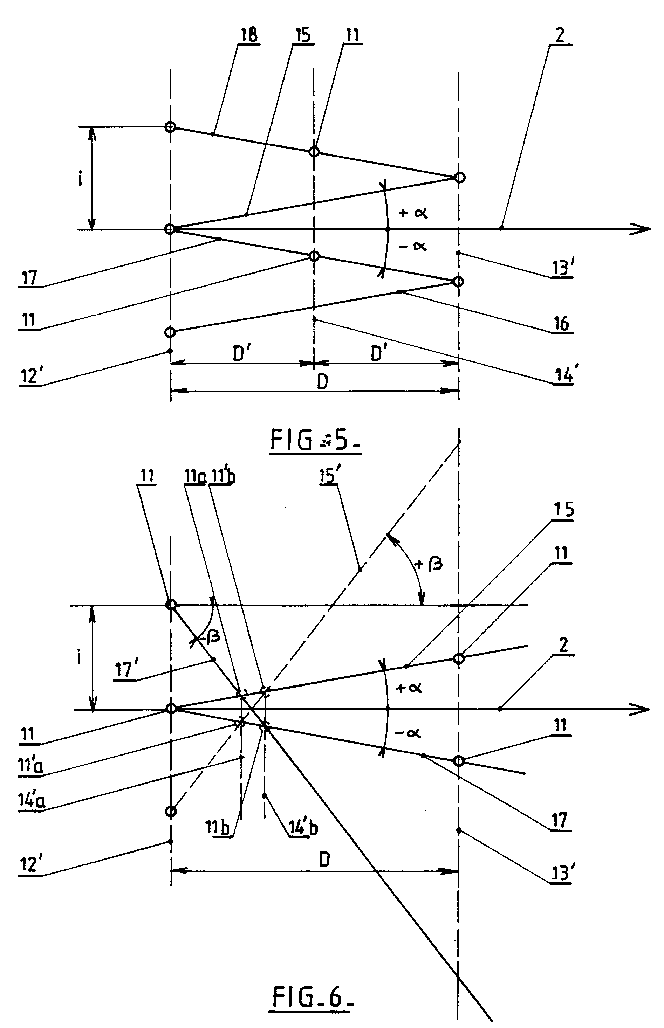

Il peut néanmoins se présenter le cas d'un tube avec un angle de bobinage α faible tel qu'illustré par la figure 5.

Avec un tel angle, il peut s'avérer que même une répartition plus dense en quinconce de pions sur trois alignements circonférentiels s'étende sur une trop grande surface de l'embout.

A ce moment, selon une variante du procédé de l'invention, on définira deux alignements circonférentiels 12' et 13' répondant à la loi de répartition selon l'invention, avec K = 2, et l'on ajoutera entre les deux alignements 12' et 13', de préférence à mi-distance, un troisième alignement 14' identique aux deux autres et constitués de pions 11 placés sur les alignements hélicoïdaux 17, 18 à pas à droite, comme représenté sur la figure 5, ou sur les alignements hélicoïdaux 15, 16 à pas à gauche.

Il est à noter toutefois qu'il s'agit d'un compromis car lesdits pions 11 de l'alignement 14' affecteront nécessairement l'enroulement aller (ou retour) des fibres.

On peut, par ailleurs', imposer à la distance D' entre deux alignements circonférentiels (12', 13', 14') consécutifs, une valeur minimale en contraignant l'implantation des pions à respecter en outre la condition suivante :

$$D' \geqq K'd \quad \text{dans laquelle}$$

. K' est un nombre entier ou fractionnaire compris entre 3 et 4,
. d est le diamètre d'un pion.

S'il s'avérait dans le cas de la figure 5 que la longueur disponible ou souhaitable pour l'implantation des pions sur l'embout métallique selon trois alignements circonférentiels entraînait, du fait de la valeur de l'angle α, une distance D' ne remplissant pas la seconde condition fixée ci-dessus, on ne retiendrait que les deux alignements 12′ et 13′.

Cette seconde condition peut, bien entendu, être imposée à la distance D des modes de répartition des figures 2 à 4.

Si le tube est constitué de deux types de fibres, par exemple des fibres en carbone destinées à tenir les efforts longitudinaux et des fibres en verre destinées à tenir les efforts circonférentiels, c'est l'angle α d'enroulement des fibres de carbone qui sera pris en compte pour la répartition des pions, le plus ou moins grand nombre de fibres de verre sectionnées pour l'insertion des pions n'aura pas fondamentalement de conséquence sur la tenue de l'embout aux efforts longitudinaux.

La mise en place des inserts intérieur 3a et extérieur 5 ainsi que le perçage des trous 9 et 10 ne nécessitent aucun usinage de l'extrémité du tube 1, ni à l'intérieur, ni à l'extérieur, les génératrices du tube demeurant rectilignes. Seul un léger "blanchissage" non destructeur de fibres peut être éventuellement nécessaire pour éliminer les rejets de résine et permettre la mise en place notamment de l'insert intérieur 3a.

Par ailleurs, les augmentations de diamètre extérieur et les diminutions de diamètre intérieur au niveau des inserts 5 et 3a sont minimisés autant que possible par rapport à la partie courante du tube en matériau composite.

Toutefois, il peut être intéressant de tenir compte du second type de fibre et de trouver un compromis permettant non seulement de limiter le sectionnement des fibres ayant le plus grand coefficient de résistance en traction, dans les mêmes conditions qu'exposées ci-dessus, mais également, dans une certaine mesure, de ménager au mieux les fibres de l'autre type qui participent aussi, bien que dans une moindre mesure, à la tenue du tube aux efforts longitudinaux.

La figure 6 illustre un mode de répartition des pions dans un tel cas, conformément à une autre variante du procédé de l'invention.

On définit tout d'abord, comme dans le cas de la figure 5, deux alignements circonférentiels 12′, 13′ de pions 11 répondant à la loi de répartition de l'invention, avec l'angle α du premier type de fibres et avec K = 2.

Ensuite, on définit un troisième alignement circonférentiel (14′a ou 14′b) interposé entre les deux autres et constitués de pions implantés à l'intersection de l'hélice à pas à droite 17′ passant par les pions 11 du premier alignement 12′ et d'angle β égal à l'angle de bobinage du second type de fibres (ou bien de l'hélice à pas à gauche de même angle) avec l'un ou l'autre des alignements hélicoïdaux à pas à gauche 15 ou à droite 17 des pions 11. A l'une des deux intersections sera implanté un pion 11a ou 11b.

On choisira éventuellement celui des deux pions 11a, 11b qui satisfait en outre à la condition supplémentaire énoncée plus haut quant à la distance minimale entre le troisième alignement 14′a ou 14′b et l'un et l'autre des alignements 12′ et 13′.

De la sorte, les pions (11a ou 11b) du troisième alignement se trouveront sur des faisceaux de fibres, du premier et du second type, déjà sectionnés par des pions 11 des deux premiers alignements 12′ et 13′. Toutefois, les pions 11a ou 11b affecteront l'enroulement de retour (ou d'aller) des fibres du second type.

Dans le cas où ladite condition supplémentaire n'est satisfaite pour aucun des alignements 14′a, 14′b, par exemple dans le cas où les angles α et β sont voisins, on reviendra à une distribution selon la figure 5.

Si l'on choisit les hélices d'angles + β à pas à gauche 15′, les pions seront implantés comme illustré en 11′a et 11′b sur la figure 6, symétriquement aux pions 11a, 11b par rapport à l'axe 2 du tube 1.

La figure 7 représente un embout métallique 3 fixé à l'extrémité d'un tube 1 en matériau composite avec une implantation des pions 11 selon le mode de la figure 6 (pions 11 et 11a ou 11′b).

La figure 8 illustre un exemple de réalisation du tube 1 à deux types d'enroulements.

Sur cette figure 8, on a représenté en 20 un mandrin d'enroulement, en 21 quatre strates de fibres de verre, chacune constituée d'un certain nombre de couches de fibres et en 22 trois strates de fibres de carbone, également chacune constituée d'un certain nombre de couches de fibres.

L'angle de bobinage des fibres de verre est par exemple de l'ordre de 60° et celui des fibres de carbone de l'ordre de 20°.

Les deux alignements 12′ et 13′ de pions 11 de la figure 7 sont déterminés avec la loi de répartition selon l'invention avec α = 20° et K = 2, cependant que l'alignement intermédiaire 14′ est déterminé conformément au mode illustré par la figure 6, avec des hélices 15′ d'angle + β = 60°.

Le procédé de l'invention s'applique d'une manière générale à toute liaison d'un tube en matériau composite travaillant en traction-compression alternée ou non, liée par exemple à un effet de pression interne, voire en torsion, avec une pièce métallique tubulaire rapportée aux extrémités, en particulier, mais non exclusivement, des embouts de raccordement.

## Revendications

1. Procédé d'assemblage mécanique d'un tube en matériau composite (1) et d'une pièce métallique tubulaire (3), caractérisé en ce que l'on réalise tout d'abord un tube (1) de section constante par enroulement filamentaire de fibres préimprégnées soumises ensuite à polymérisation, puis l'on tronçonne perpendiculairement à son axe le tube ainsi obtenu, à la longueur désirée, puis on introduit au moins partiellement à chaque extrémité du tube ainsi tronçonné une pièce métallique tubulaire (3) et l'on solidarise l'extrémité du tube et la partie pénétrante de l'insert métallique à l'aide d'éléments de pénétration (11) disposés suivant des alignements circonférentiels (12,13,14) réguliers, identiques et identiquement espacés les uns des autres, définissant chacun un plan perpendiculaire à l'axe du tube (1) et conformément à la loi de répartition suivante :

$$D = \frac{(n - 1)i}{K \, tg \, \alpha}$$

dans laquelle
- . D est la distance entre deux plans successifs d'alignements circonférentiels (12,13,14) d'éléments de pénétration (11),
- . K est un nombre entier égal à 1 ou 2,
- . n est le nombre d'alignements (12,13,14),
- . i est l'intervalle entre deux éléments de pénétration consécutifs (11) d'un même alignement (12,13,14),
- . $\alpha$ est l'angle, par rapport à l'axe du tube (1), de la couche des fibres devant assurer la résistance en traction.

2. Procédé suivant la revendication 1, caractérisé en ce que chaque alignement circonférentiel (12,13,14) comporte un même nombre d'éléments de pénétration (11) déterminé de façon à obtenir un équilibre entre la résistance au matage du matériau composite en appui sur tous les éléments de pénétration (11) de l'assemblage et la résistance en traction de la section restante de matériau composite sur l'alignement circonférentiel considéré, ledit équilibre répondant à l'équation suivante :

$$Rm.d.N.n = Rt \, (\pi D - d'N)$$

dans laquelle
- . Rm est la résistance au matage du matériau composite ;
- . d est le diamètre des éléments de pénétration (11) ;
- . N est le nombre des éléments de pénétration (11) par alignement circonférentiel (12,13,14) ;
- . n est le nombre d'alignements circonférentiels (12,13,14) ;
- . Rt est la résistance en traction du matériau composite ;
- . D est le diamètre moyen du tube en matériau composite (1).
- . $d' = \dfrac{d}{cos \, \alpha}$ = diminution de la section résistante liée à la présence d'un perçage réalisé dans les fibres.

3. Procédé suivant la revendication 1 ou 2, caractérisé en ce que le nombre n d'alignements (12',13') est égal à 2, en ce que K est choisi égal à 2 et en ce qu'un troisième alignement (14') d'éléments de pénétration (11) est interposé entre les deux premiers, parallèlement à ceux-ci et de préférence à égale distance (D') de ces derniers, lesdits éléments de pénétration (11) étant placés sur les alignements hélicoïdaux à pas à gauche (15) ou à pas à droite (17) des éléments de pénétration desdits deux premiers alignements (12',13').

4. Procédé suivant la revendication 1, caractérisé en ce que le tube en matériau composite (1) est constitué de deux types de fibre avec des enroulements d'angle différent, l'angle $\alpha$ choisi pour la répartition des éléments de pénétration (11) étant l'angle d'enroulement du type de fibres ayant la plus grande résistance en traction.

5. Procédé suivant la revendication 4, caractérisé en ce que le nombre n d'alignements circonférentiels (12',13') est égal à 2, K est choisi égal à 2 et en ce qu'un troisième alignement circonférentiel (14'a, 14'b) est interposé entre les deux premiers, parallèlement à ceux-ci, lesdits éléments de pénétration (11a,11'a ; 11b, 11'b) étant répartis à l'intersection de l'un ou l'autre des alignements hélicoïdaux (15, 17) d'éléments de pénétration (11) des deux premiers alignements circonférentiels (12',13') avec l'une ou l'autre des hélices (15',17') passant par les éléments de pénétration (11) du premier alignement circonférentiel (12') et d'angle égal à l'angle d'enroulement ($\beta$) du second type de fibres.

6. Procédé suivant l'une des revendications 1 à 5, caractérisé en ce que la distance (D ou D') entre deux alignements circonférentiels successifs d'éléments de pénétration (11a,11'a, 11b,11'b) satisfait en outre à la condition suivante :

    D ou D'≧K'd       dans laquelle
- K' est un nombre entier ou fractionnaire compris entre 3 et 4,
- d est le diamètre d'un élément de pénétration (11).

7. Procédé suivant la revendication 1, 2 ou 4, caractérisé en ce que le nombre n d'alignements circonférentiels (12,13,14) d'éléments de pénétration (11) est choisi égal à 3.

8. Assemblage d'un tube en matériau composite et d'une pièce tubulaire métallique susceptible d'être obtenu conformément au procédé selon l'une des revendications 1 à 7.

9. Assemblage selon la revendication 8, caractérisé en ce que la pièce métallique est un embout (3) comprenant une partie (3a) engagée partiellement à l'intérieur du tube (1), une partie externe tubulaire (5) rapportée sur l'embout (3) en sorte de prendre en sandwich l'extrémité du tube (1) et en ce que les éléments de pénétration sont des pions radiaux (11,11a,11′a,11b,11′b) dont les extrémités sont engagés dans des perçages (9,10) réalisés dans lesdites parties interne (3a) et externe (5) de l'embout (3).

10. Assemblage suivant la revendication 9, caractérisé en ce que les perçages (9) réalisés dans ladite partie interne (3a) ne débouchent pas sur la face interne de ladite partie (3a).

**Patentansprüche**

1. Verfahren zum mechanischen Verbinden eines Verbundstoffrohrs (1) und eines rohrförmigen Metallteils (3), dadurch gekennzeichnet, daß man zunächst ein Rohr (1) von konstantem Querschnitt durch fadenförmiges Wickeln von vorimprägnierten Fasern, die dann einer Polymerisation unterworfen werden, herstellt, man danach das auf diese Weise erhaltene Rohr senkrecht zu seiner Achse auf die gewünschte Länge ablängt, man dann wenigstens teilweise am jedem Ende des so abgelängten Rohrs ein rohrförmiges Metallteil (3) einführt und man das Ende des Rohrs und den eingesetzten Abschnitt des metallischen Einsatzes mittels Durchdringungselementen (11) verbindet, die in identischen und identisch zueinander beabstandeten, regelmäßigen Umfangsausrichtungen (12, 13, 14), die jeweils eine Ebene senkrecht zur Achse des Rohrs (1) bilden, und gemäß folgender Verteilungsregel angeordnet werden:

$$D = \frac{(n-1)i}{K \, tg \, \alpha}$$

in der

. D der Abstand zwischen zwei aufeinanderfolgenden Ebenen der Umfangsausrichtungen (12, 13, 14) der Durchdringungselemente (11) ist,
. K eine ganze Zahl gleich 1 oder 2 ist,
. n die Zahl der Ausrichtungen (12, 13, 14) ist,
. i das Intervall zwischen zwei in einer selben Ausrichtung (12, 13, 14) aufeinanderfolgenden Durchdringungselementen (11) ist,
. α der Winkel in bezug auf die Achse des Rohrs (1) der Faserschicht ist, die die Zugfestigkeit sicherzustellen hat.

2. Verfahren nach Anspruch 1, dadurch gekennzeichnet, daß jede Umfangsausrichtung (12, 13, 14) die gleiche Anzahl von Durchdringungselementen (11) aufweist, die derart bestimmt ist, daß ein Gleichgewicht zwischen dem Stauchwiderstand des Verbundstoffs in Anlage an allen Durchdringunsgelementen (11) und dem Zugwiderstand des verbleibenden Querschnitts des Verbundstoffs zur betrachteten Umfangsausrichtung erhalten wird, wobei besagtes Gleichgewicht folgender Gleichung gehorcht:

$$Rm.d.N.n = Rt \, (\pi D - d'N)$$

in der

. Rm der Stauchwiderstand des Verbundstoffs ist;
. N die Zahl der Durchdringungselemente (11) pro Umfangsausrichtung (12, 13, 14) ist;
. d der Durchmesser der Durchdringungselemente (11) ist;
. n die Zahl der Umfangsausrichtungen (12, 13, 14) ist;
. Rt der Zugwiderstand des Verbundstoffs ist;
. D der mittlere Durchmesser des Verbundstoffrohrs (1) ist;
. $d' = \dfrac{d}{\cos \alpha}$ = Verminderung des Widerstandsquerschnitts aufgrund der Anwesenheit einer in den Fasern realisierten Durchbohrung ist.

3. Verfahren nach Anspruch 1 oder 2, dadurch gekennzeichnet, daß die Zahl n der Ausrichtungen (12′, 13′) gleich 2 ist, daß K gleich 2 gewählt und daß eine dritte Ausrichtung (14′) von Durchdringsungselementen (11) zwischen den beiden ersten parallel zu diesen und vorzugsweise in gleichem Abstand (D′) zu diesen letzteren angeordnet wird, wobei besagte Durchdringungselemente (11) auf den Ausrichtungen schraubenlinienförmig mit Rechts- oder Linkssteigung von Durchdringungselementen der besagten beiden ersten Ausrichtungen (12′, 13′) angeordnet werden.

4. Verfahren nach Anspruch 1, dadurch gekennzeichnet, daß das Verbundstoffrohr (1) aus zwei Typen von Fasern mit unterschiedlichem Wickelwinkel gebildet wird, wobei der Winkel α, der für die Verteilung der Durchdringungselemente (11) gewählt wird, der Wickelwinkel des Fasertyps ist, der die größte Zugfestigkeit aufweist.

5. Verfahren nach Anspruch 4, dadurch gekennzeichnet, daß die Zahln n der Umfangsausrichtungen (12′, 13′) gleich 2 ist, K gleich 2 gewählt und daß eine dritte Umfangsausrichtung (14′a, 14′b) zwischen den beiden ersten parallel zu diesen angeordnet wird, wobei besagte Durchdringungselemente (11a, 11'a; 11b, 11'b) an Kreuzungsstellen von schraubenlinienförmigen Ausrichtungen (15, 17) von Durchdringungselementen (11) der beiden ersten Umfangsausrichtungen (12', 13') angeordnet werden, wobei die eine oder andere der Schraubenlinien (15', 17') durch die Durchdringungselemente (11) der ersten Umfangsausrichtung (12') verlaufen und der Winkel gleich dem Wickelwinkel (β) des zweiten Fasertyps ist.

6. Verfahren nach einem der Ansprüche 1 bis 5, dadurch gekennzeichnet, daß der Abstand (D oder D') zwischen zwei aufeinanderfolgenden Umfangsausrichtungen von Durchdringungselementen (11a, 11'a; 11b, 11'b) zudem folgende Bedingung erfüllt:

D oder D' ≧ K'd        in der

- K' eine ganze oder gebrochene Zahl zwischen 3 und 4 ist,
- d der Durchmesser eines Durchdringungselements (11) ist.

7. Verfahren nach Anspruch 1, 2 oder 4, dadurch gekennzeichnet, daß die Zahl n von Umfangsausrichtungen (12, 13, 14) von Durchdringungselementen (11) gleich 3 gewählt wird.

8. Aufbau aus einem Verbundstoffrohr und einem rohrförmigen Metallteil, geeignet, gemäß dem Verfahren nach einem der Ansprüche 1 bis 7 erhalten zu werden.

9. Aufbau nach Anspruch 8, dadurch gekennzeichnet, daß das Metallteil eine Zwinge (3) ist, die einen Abschnitt (3a), der insbesondere mit dem Inneren des Rohrs (1) in Eingriff steht, und einen äußeren, von der Zwinge (3) derart getragenen Rohrteil (5) aufweist, daß das Ende des Rohrs (1) sandwichartig aufgenommen wird, und daß die Durchdringungselemente radiale Stifte (11, 11'a, 11b, 11'b) sind, deren Enden in Bohrungen (9, 10) sitzen, die in besagten inneren (3a) und äußeren (5) Teilen der Zwinge realisiert sind.

10. Aufbau nach Anspruch 9, dadurch gekennzeichnet, daß die Bohrungen (9), die in besagtem inneren Teil (3a) realisiert sind, nicht an der Innenfläche besagten Teils (3a) münden.

**Claims**

1. Method for the mechanical assembly of a tube made of a composite material (1) and a tubular metal component (3), characterised in that a tube (1) with a constant cross section is first of all produced by the filament winding of pre-impregnated fibres thereafter subjected to polymerization, then the tube thus obtained is cut into sections perpendicularly to its axis, to the desired length, then a tubular metal component (3) is inserted at least partially at each end of the tube thus cut into sections and the end of the tube and the penetrating part of the metal insert are fixed together by means of penetration elements (11) arranged in regular circumferential alignments (12, 13, 14), identical and identically spaced with respect to each other, each defining a plane perpendicular to the axis of the tube (1) and in accordance with the following distribution law:

$$D = \frac{(n-1)i}{K \, tg \, \alpha}$$

in which
- D is the distance between two successive planes of circumferential alignments (12, 13, 14) of penetration elements (11),
- K is an integer equal to 1 or 2,
- n is the number of alignments (12, 13, 14),
- i is the interval between two consecutive penetration elements (11) in a single alignment (12, 13, 14),
- α is the angle, with respect to the axis of the tube (1), of the layer of fibres which is to provide tensile strength.

2. Method according to Claim 1, characterised in that each circumferential alignment (12, 13, 14) has the same number of penetration elements (11) determined so as to obtain a balance between the resistance to hammering of the composite material bearing on all the penetration elements (11) of the assembly, and the tensile strength of the remaining section of composite material on the circumferential alignment concerned, the said balance satisfying the following equation:

Rm.d.N.n = Rt (πD - d'N)

in which
- Rm is the resistance to hammering of the composite material;
- d is the diameter of the penetration elements (11);
- N is the number of penetration elements (11) per circumferential alignment (12, 13, 14);
- n is the number of circumferential alignments (12, 13, 14);
- Rt is the tensile strength of the composite material;
- D is the mean diameter of the tube made of a composite material (1).

- $d' = \dfrac{d}{\cos \alpha}$ = reduction in the stressed cross section cos a related to the presence of a perforation produced in the fibres.

3. Method according to Claim 1 or 2, characterised in that the number n of alignments (12', 13') is equal to 2, in that K is chosen so as to be equal to 2 and in that a third alignment (14') of penetration elements (11) is interposed between the first two, parallel to the latter and preferably at an equal distance (D') from the latter, the said penetration elements (11) being placed on the left-handed (15) or right-handed (17) helical alignments of the penetration elements of the said first two alignments (12', 13').

4. Method according to Claim 1, characterised in that the tube made of a composite material (1) is formed from two types of fibre with windings at different angles, the angle $\alpha$ chosen for the distribution of the penetration elements (11) being the winding angle of the type of fibres having the greatest tensile strength.

5. Method according to Claim 4, characterised in that the number n of circumferential alignments (12', 13') is equal to 2 and K is chosen so as to be equal to 2, and in that a third circumferential alignment (14'a, 14'b) is interposed between the first two, parallel to the latter, the said penetration elements (11a, 11'a; 11b, 11'b) being distributed at the intersection of one or other of the helical alignments (15, 17) of penetration elements (11) of the first two circumferential alignments (12', 13') with one or other of the helixes (15', 17') passing through the penetration elements (11) of the first circumferential alignment (12') and having an angle equal to the winding angle ($\beta$) of the second type of fibre.

6. Method according to one of Claims 1 to 5, characterised in that the distance (D or D') between two successive circumferential alignments of penetration elements (11a, 11'a, 11b, 11'b) also satisfies the following condition:

$$D \text{ or } D' \geqq K'd \quad \text{in which}$$

- K' is an integer or fraction between 3 and 4,
- d is the diameter of a penetration element (11).

7. Method according to Claim 1, 2 or 4, characterised in that the number n of circumferential alignments (12, 13, 14) of penetration elements (11) is chosen so as to be equal to 3.

8. Assembly of a tube made of a composite material and a metal tubular component able to be obtained in accordance with the method according to one of Claims 1 to 7.

9. Assembly according to Claim 8, characterised in that the metal component is a connecting piece (3) comprising a part (3a) partially engaged inside the tube (1), an outer tubular part (5) attached to the connecting piece (3) so as to sandwich the end of the tube (1), and in that the penetration elements are radial pins (11, 11a, 11'a, 11b, 11'b) whose ends are engaged in perforations (9, 10) produced in the said inner (3a) and outer (5) parts of the connecting piece (3).

10. Assembly according to Claim 9, characterised in that the perforations (9) produced in the said inner part (3a) do not open out on the internal face of the said part (3a).

EP 0 511 138 B1

FIG_1_

FIG_8_

FIG_7_

FIG. 2.

FIG. 3.

12

FIG. 4.

FIG ≈ 5.

FIG. 6.